# EUROPEAN PATENT APPLICATION

(11) **EP 4 768 445 A1**
(43) Date of publication of application: **01.07.2026**
(21) Application number: 25206549.5
(22) Date of filing: 03.10.2025
(51) Int. Cl.: C02F 1/42

(54) **A REGENERATION KIT FOR ION EXCHANGE RESINS**

(30) Priority: 26.12.2024 TR 2024020737
(71) Applicant: Arçelik Anonim Sirketi, 34445 Istanbul (TR)
(72) Inventor: TAKIT, Arda, 34445 Istanbul (TR); KILIC, Levent, 34445 Istanbul (TR); POLAT, Murathan Eren, 34445 Istanbul (TR); ERULKU, Damlanur, 34445 Istanbul (TR); CAVUSOGLU, Pinar, 34445 Istanbul (TR)

(57) **Abstract**

The present invention relates to a regeneration kit (10) comprising a water softening reservoir (1) having a tubular reservoir body (11) which is arranged integrally with a device body (101) of a household appliance (100) and, during use, through which the mains water flows, a water inlet channel (13) which allows the entry of the mains water into the reservoir body (11) and a water outlet channel (14) which allows the exit of the mains water from the reservoir body (11); a resin filter (2) which is configured to be inserted into and removed from the water softening reservoir (1) and which has a tubular filter body (21) provided with an ion exchange resin, a water inlet plate (23) arranged at a first end (22) of the filter body (21) and provided with water inlet openings (231) allowing the fluid to enter the filter body (21) during use in the water softening reservoir (1) and a water outlet plate (25) arranged at a second end (24) of the filter body (21) and provided with water outlet openings (251) allowing the fluid to exit the filter body (21) during use in the water softening reservoir (1); and a regeneration casing (3) having a casing body (31) which is configured to be filled with brine (S) in order to allow the resin filter (2) to be stored outside the appliance body (101) and to enable the regeneration of the ion exchange resin independently of the appliance body (101).

## Description

The present invention relates to a regeneration kit for resin regeneration in household appliances provided with ion exchange resin, which does not require an additional receptacle in the appliance body and thus provides space savings in the internal volume of the body.

Ion exchange resins are commonly used in applications such as softening, purifying water, or removing undesirable ions. These resins gradually lose their ion exchange capacity and require a regeneration process to become effective again. In the state of the art embodiments, the regeneration process is generally performed through a regeneration receptacle integrated into the appliance body. However, such systems lead to certain limitations and problems in appliance design. Regeneration receptacles positioned in the body increase the total size of the appliance and restrict the usable space in the body. This creates a significant disadvantage, especially in residential or commercial environments where compact appliance designs are in demand.

Moreover, various technical problems may arise in connection with the regeneration receptacles positioned in the body. For example, during the regeneration process, problems such as clogging or flow imbalance may occur as the water and regeneration chemicals pass through the receptacle, chemical build-up may take place in the receptacle, and disassembly of the appliance may be required for maintenance or repair of the receptacle. Such failures may adversely affect the performance of the appliance and increase maintenance costs. Furthermore, the regeneration receptacles positioned in the body may cause leakage due to sealing components which degrade over time. This may lead to corrosion in the appliance and also in the surrounding environment. In addition, the regeneration receptacles positioned in the body result in unnecessary consumption of water and chemical substances during the regeneration process, and also bring about a situation which is unsustainable both economically and environmentally.

Accordingly, in the prior art, there are applications which provide alternatives to the conventional regeneration systems. For example, in the state of the art Patent Document No. EP4386126A1, a household appliance is disclosed, provided with a softening system which reduces the hardness of fresh water. In the said softening system, a softening agent container, a removable salt container for regenerating the softening agent and a cavity for accommodating the salt container are provided. The softening system may be in a first position where the salt container is placed in the cavity or in a second position where the salt container is not placed in the cavity.

It is observed that the state of the art regeneration systems fall short in terms of providing savings in the internal body volume, improving regeneration efficiency, and additionally offering ease of use to the user and enabling control over the frequency of regeneration. Therefore, the need still remains for solutions which are both user-friendly and reduce appliance maintenance costs.

The aim of the present invention is the realization of a regeneration kit which is configured to ensure the regeneration of the ion exchange resin independently of the appliance body and which allows the user to control the resin regeneration process at their own discretion and/or based on notifications received from the relevant household appliance. Thus, while saving on the usable volume in the body of the household appliance, the regeneration of the resin can also be performed by the user in a controlled manner and with reduced cost.

The regeneration kit of the present invention comprises a water softening reservoir having a tubular reservoir body which is arranged integrally with a device body of a household appliance and, during use, through which the mains water flows, a water inlet channel which allows the entry of the mains water into the reservoir body and a water outlet channel which allows the exit of the mains water from the reservoir body; a resin filter which is configured to be inserted into and removed from the water softening reservoir and which has a tubular filter body provided with an ion exchange resin, a water inlet plate arranged at a first end of the filter body and provided with water inlet openings allowing the fluid to enter the filter body during use in the water softening reservoir and a water outlet plate arranged at a second end of the filter body and provided with water outlet openings allowing the fluid to exit the filter body during use in the water softening reservoir; and a regeneration casing having a casing body which is configured to be filled with brine in order to allow the resin filter to be stored outside the appliance body and to enable the regeneration of the ion exchange resin independently of the appliance body.

Thus, while the ion exchange resin softens the mains water in the appliance body, the regeneration of the said resin is performed outside the appliance body. Consequently, the user removes the resin filter containing the resin of which the softening capacity has been exhausted from the appliance body, places the same into the regeneration casing, and ensures the treatment thereof with the brine therein. This configuration eliminates the need for a separate receptacle in the appliance body for the regeneration of the ion exchange resin, which provides a technical advantage creating usable volume in the appliance body. Thus, the appliance body may be reduced in size to occupy less space, or additional functional components may be placed in the volume thus opened. The absence of a regeneration receptacle in the appliance body also completely eliminates any faults or leaks which may otherwise occur therein. Furthermore, since the said configuration does not require a regeneration cycle in the appliance body, significant savings in water consumption are achieved. This, in turn, is another user-friendly improvement which reduces both water and maintenance costs. The term "water softening" referred to herein means the capture of hardness ions such as calcium and magnesium in the mains water by the ion exchange resin and the release of sodium ions into the water in their place.

In an embodiment of the present invention, the filter body, when in use in the water softening reservoir, is configured to be retained in a snap fit manner in the reservoir body and to enable the transfer of the mains water from the first end to the second end to be performed in a concentric manner with the reservoir body. Thus, the mains water taken into the resin filter can be directly transferred into the filter body through the water inlet openings. Consequently, the direct interaction of the mains water with the ion exchange resin is ensured, and leaks which may occur between the filter body and the reservoir body are prevented.

In an embodiment of the present invention, the resin filter is provided with a sealing lid which, when the resin filter is in use in the water softening reservoir, closes a reservoir opening of the reservoir body corresponding to the first end of the filter body, and when the resin filter is stored in the regeneration casing, closes a casing opening of the casing body corresponding to the first end of the filter body. Thus, by means of a single sealing lid provided on the filter body, the connection of both the water softening reservoir and the regeneration casing to the external environment can be cut off during use. By means of the sealing lid being provided adjacent to the filter body, the risk of losing components is also reduced.

In an embodiment of the present invention, the water inlet plate has a lid contact surface which remains in contact with the sealing lid while the sealing lid is integrated with the filter body, and a perforated surface which extends radially from the first end of the filter body toward the lid contact surface and on which the water inlet openings are provided. According to the said configuration, the lid contact surface ensures the connection of the filter body with the sealing lid, while the perforated surface surrounding the lid contact surface allows the mains water to enter the filter body. This configuration enables both the water inlet into the filter body and the sealing lid connection to be achieved on a single plate, namely, the water inlet plate.

In an embodiment of the present invention, the perforated surface is arranged such that the water inlet openings form a radial symmetry. Thus, it is ensured that the mains water passes through each of the water inlet openings in equal amounts and consequently makes homogeneous contact with the ion exchange resin in the filter body. This increases the softening performance in the water softening reservoir and delays the need for regeneration.

In an embodiment of the present invention, the perforated surface, when the resin filter is in use in the water softening reservoir, is inclined so as to form an acute angle with the reservoir body and thereby create a flow guiding volume which allows the rotational flow of the mains water entering through the water inlet channel between the sealing lid and the perforated surface. According to this configuration, the mains water entering the water softening reservoir circulates in the cyclic volume created between the perforated surface and the sealing lid before entering the filter body. The inclination of the perforated surface delays the direct orientation of the water toward the water inlet openings and generates a vortex effect in the flow guiding volume. Thus, the mains water is homogeneously distributed into the filter body through each water inlet opening provided on the perforated surface.

In an embodiment of the present invention, on the lid contact surface, a claw structure is provided, which is configured to engage with a mounting protrusion of the sealing lid so as to ensure that the sealing lid remains fixed on the filter body. Thus, when the user rotates the sealing lid in order to remove the resin filter from the water softening reservoir, the sealing lid is prevented from separating from the filter body. Consequently, once the sealing lid is disengaged from the reservoir body, the filter body can be removed from the water softening reservoir while remaining attached to the sealing lid. Similarly, when the user rotates the sealing lid in order to remove the resin filter from the regeneration casing, the sealing lid is prevented from separating from the casing body. Thus, once the sealing lid is disengaged from the casing body, the filter body can also be removed from the regeneration casing while remaining attached to the sealing lid. This configuration facilitates mounting and dismounting of the resin filter for the user.

In an embodiment of the present invention, the resin filter comprises a first sealing member which is arranged between the first end and the water inlet plate so as to surround the filter body. Thus, when the resin filter is in use in the water softening reservoir, the mains water taken into the reservoir body from the water inlet channel can be directly transferred into the filter body. In other words, the sealing between the filter body and the reservoir body is improved. This configuration also supports the snap-fit retention of the filter body in the reservoir body.

In an embodiment of the present invention, the resin filter comprises a second sealing member which is arranged so as to surround a radial thickness of the sealing lid, such that when the resin filter is in use in the water softening reservoir, the second sealing member remains between the sealing lid and the reservoir body, and when the resin filter is in the regeneration casing, the second sealing member remains between the sealing lid and the casing body. According to this configuration, when the resin filter is in mounted use in the water softening reservoir, the water is prevented from leaking from the water softening reservoir to the outside of the appliance body. On the other hand, when the resin filter is in the regeneration process in the regeneration casing, the brine is prevented from leaking from the regeneration casing to the outside.

In an embodiment of the present invention, the water outlet plate is arranged such that the water outlet openings form a radial symmetry. By means of this configuration, it is ensured that the water softened by passing through the ion exchange resin exits the filter body in a homogeneous manner, which eliminates potential clogging and guarantees the sustainability of softening cycles.

The present invention also discloses a household appliance comprising the water softening reservoir provided in a regeneration kit as in any one of the above embodiments. The household appliance of the present invention comprises an appliance body into which the water softening reservoir is integrated. This configuration supports the technical advantages provided by the regeneration kit of the present invention.

In an embodiment of the present invention, the water softening reservoir is inclined such that the flow direction of the mains water passing through the filter body forms an angle of 5-30° with the arrangement plane on which the appliance body stands during use. By means of this configuration, taking the arrangement plane as reference, the water inlet channel is positioned higher than the water outlet channel. Thus, the risk of the mains water leaving the water softening reservoir and leaking out of the appliance body is completely eliminated. This inclination also facilitates the passage of the mains water through the resin filter by means of gravitational acceleration.

In an embodiment of the present invention, the household appliance of the present invention is a washing appliance. Accordingly, the washing appliance comprises a mains water line which is configured to deliver the mains water to the water inlet channel, and a washing water line which is configured to transfer the water, softened by passing through the resin filter and exiting the reservoir body through the water outlet channel, to a washing chamber. Thus, the functional integration of the water softening reservoir into the appliance body is enabled.

In an embodiment of the present invention, the washing appliance also comprises a sensor which is adapted to measure the softening capacity of the ion exchange resin provided in the resin filter. Thus, the user is informed about the condition of the ion exchange resin and may, whenever desired, remove the resin filter from the appliance body and leave the same in the regeneration casing for regeneration. The said sensor may comprise an alarm unit which is configured either in the appliance body or independently of the appliance body. Thus, when the softening capacity of the ion exchange resin drops to critical levels, the user can be warned.

The washing appliance of the present invention may be a washing machine or a dishwasher.

The present invention also discloses a water softening and ion exchange resin regeneration method wherein a regeneration kit as in any one of the above embodiments is used. The method of the present invention comprises the following process steps:
i. Placing the resin filter containing the ion exchange resin into the water softening reservoir integrated into the appliance body,
ii. Softening the mains water by being passed through the water softening reservoir and hence through the resin filter,
iii. Informing the user, after several washing cycles, that the softening capacity of the ion exchange resin has been exhausted,
iv. Preparing a brine solution and filling the same into the regeneration casing,
v. Removing the resin filter from the water softening reservoir and placing the same into the regeneration casing filled with the brine,
vi. Regenerating the ion exchange resin in the resin filter by leaving the resin filter in the regeneration casing for at least 10 days,
vii. Removing the resin filter from the regeneration casing after the regeneration process is completed, and
viii. Repeating the process starting from step (i).

The method of the present invention supports all the technical advantages provided by the regeneration kit of the present invention. The salt concentration of the said brine solution may range between 8-12% (weight/volume) based on the total volume of water.

The regeneration kit realized in order to attain the aims of the present invention is illustrated in the attached figures, where:
Figure 1 - is the perspective view of the washing appliance in an embodiment of the present invention.
Figure 2 - is the enlarged view of the detail A in the embodiment of the present invention shown in Figure 1.
Figure 3 - is the front cross-sectional view of the water softening reservoir, when the resin filter is mounted, in an embodiment of the present invention.
Figure 4 - is the view of the water softening reservoir (sideways view), the resin filter (perspective view) and the regeneration casing (perspective view) provided in the regeneration kit in an embodiment of the present invention.
Figure 5 - is the sideways cross-sectional view of the water softening reservoir, when the resin filter is mounted, in an embodiment of the present invention.
Figure 6 - is the enlarged view of the detail B in the embodiment of the present invention shown in Figure 5.
Figure 7 - is the perspective view of the resin filter, when joined with the sealing lid, in an embodiment of the present invention.
Figure 8 - is the sideways cross-sectional view of the resin filter, when joined with the sealing lid, in the embodiment of the present invention shown in Figure 7.
Figure 9 - is the front view of the resin filter, when the sealing lid is separated from the filter body, in an embodiment of the present invention.
Figure 10 - is the rear view of the resin filter in an embodiment of the present invention.
Figure 11 - is the sideways cross-sectional view of the regeneration casing, when the resin filter is being regenerated, in an embodiment of the present invention.

The elements illustrated in the figures are numbered as follows:
- 1.: Household appliance
101. Appliance body
102. Washing chamber
103. Mains water line
104. Washing water line
- 10.: Regeneration kit
- 1.: Water softening reservoir
11. Reservoir body
111. Expansion region
12. Reservoir opening
13. Water inlet channel
14. Water outlet channel
- 2.: Resin filter
21. Filter body
22. First end
23. Water inlet plate
231. Water inlet openings
232. Lid contact surface
233. Claw structure
234. Perforated surface
24. Second end
25. Water outlet plate
251. Water outlet openings
26. Sealing lid
261. Mounting protrusion
27. First sealing member
28. Second sealing member
- 3.: Regeneration casing
31. Casing body
32. Casing opening
- 4.: Flow guiding volume
- X.: Acute angle
- Y.: Flow direction
- Z.: Arrangement plane
- S.: Brine
- T.: Salt

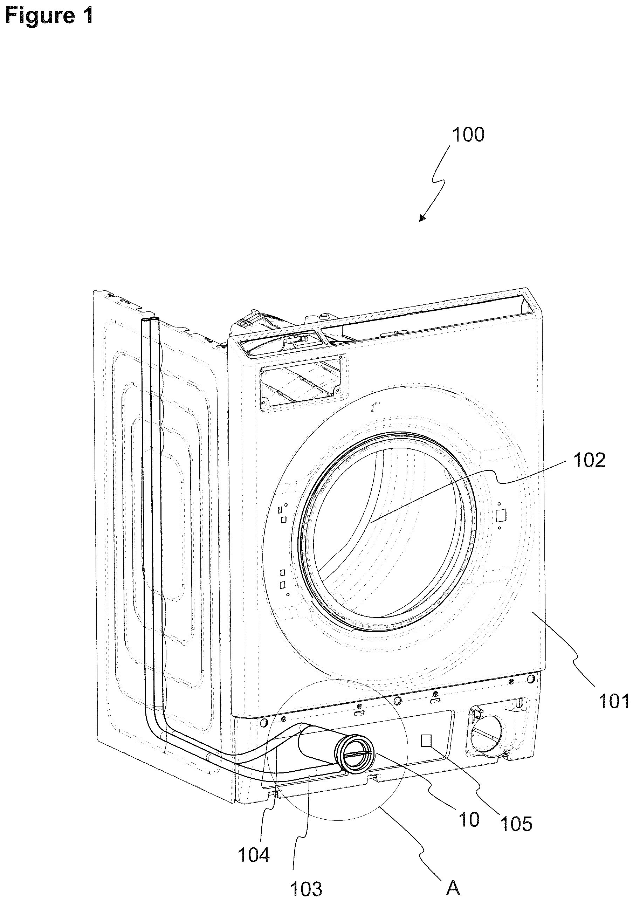

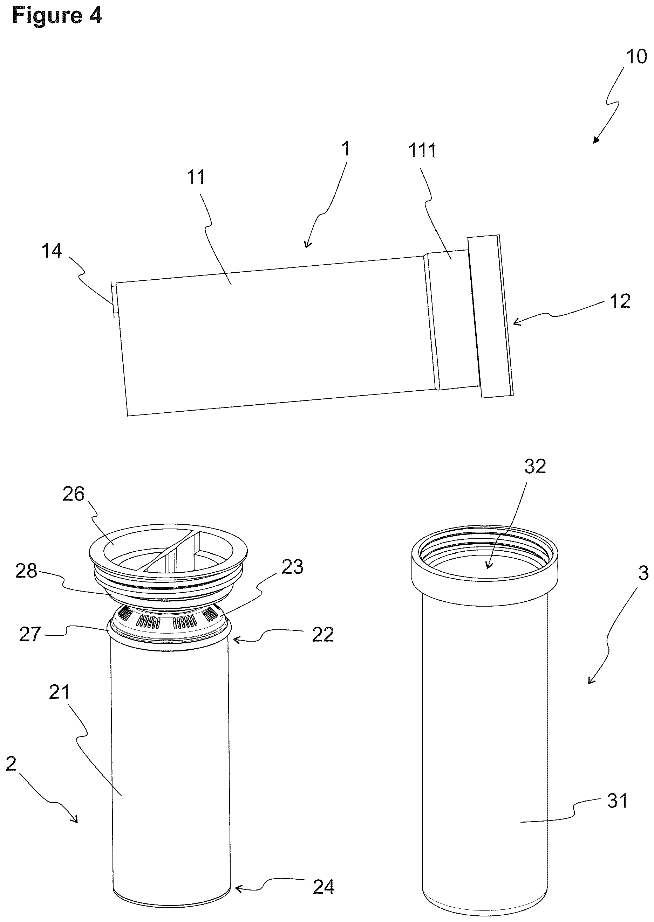

Within the scope of the present invention, the regeneration kit (10) comprises, as shown in Figure 4, essentially three separate components: a water softening reservoir (1), a resin filter (2), and a regeneration casing (3). Accordingly, the resin filter (2) can be inserted into and removed from both the water softening reservoir (1) and the regeneration casing (3). As can be understood from Figure 1, the water softening reservoir (1) comprises a tubular reservoir body (11) integrated into the appliance body (101) of a household appliance (100).

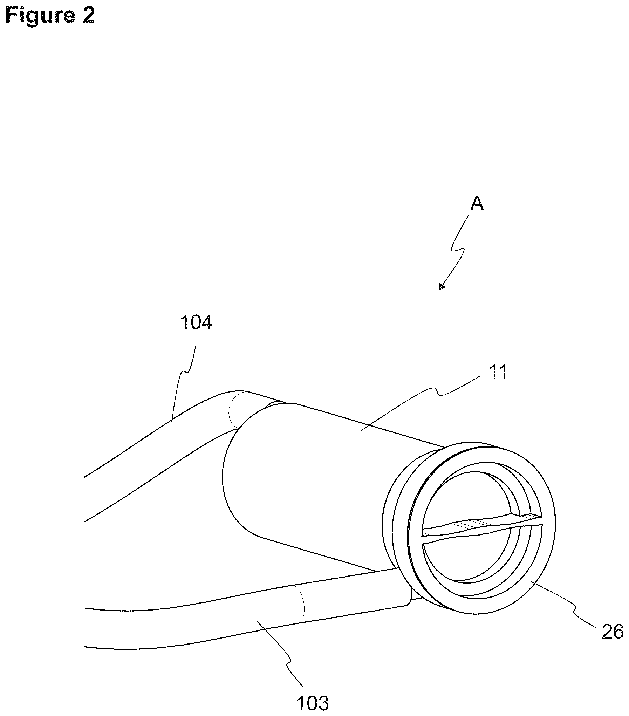

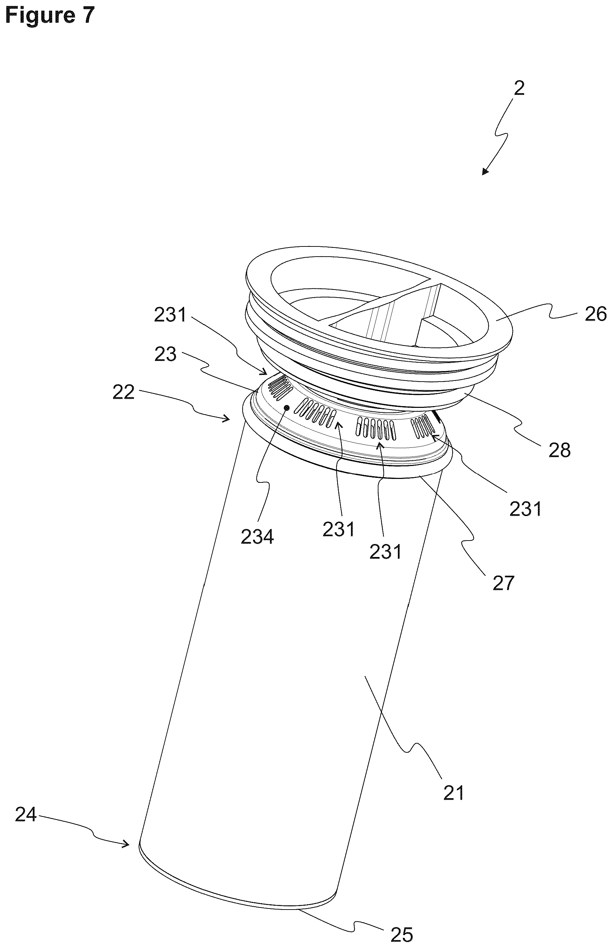

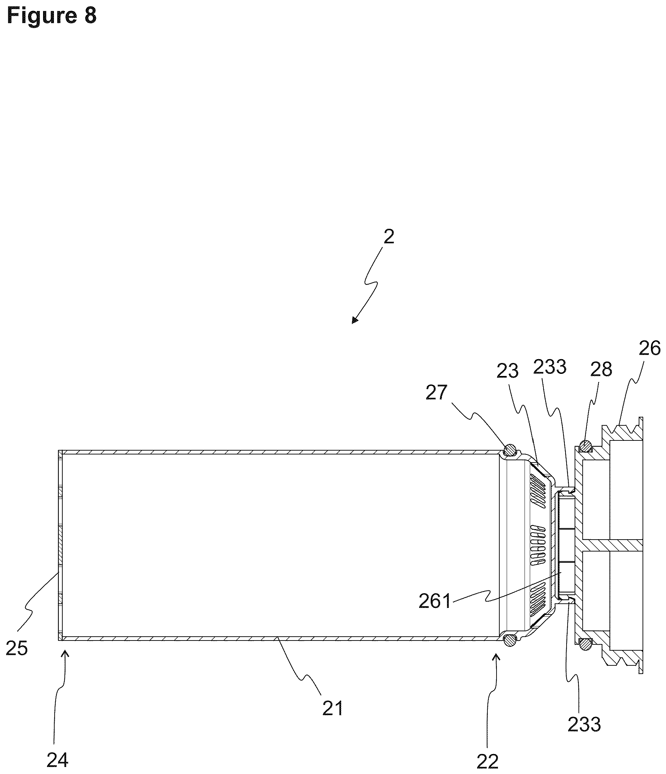

As shown in Figure 7, the resin filter (2) comprises a tubular filter body (21) filled with the ion exchange resin, and as can be understood from Figures 1 and 2, is suitable for use in the softening of the mains water when mounted in the water softening reservoir (1), in other words, in the appliance body (101). When desired, for example, upon receiving a notification that the softening capacity of the ion exchange resin has been exhausted, via a sensor (105) associated with the household appliance (100), the user may rotate the sealing lid (26) shown in Figure 2 to remove the resin filter (2) from the water softening reservoir (1) in a single motion, since the sealing lid (26) is configured to be mountable on the filter body (21), as shown in Figures 7 and 8.

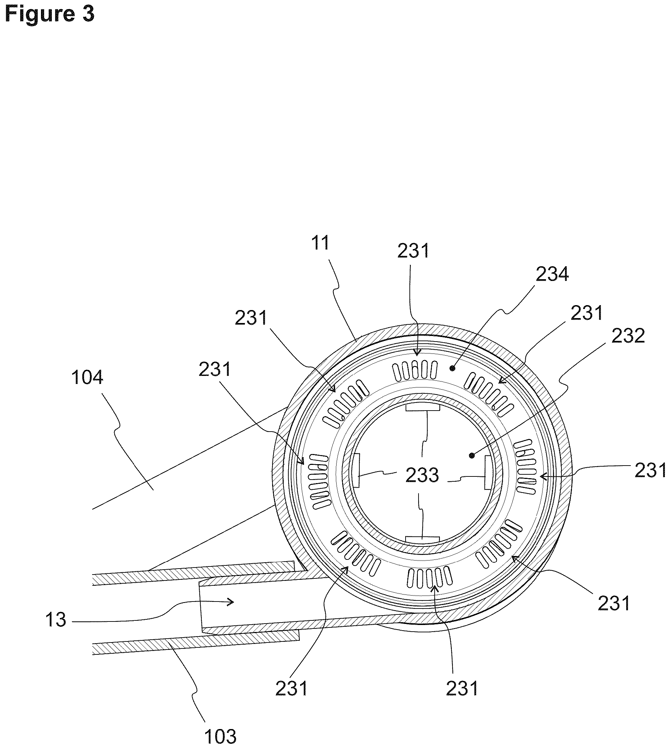

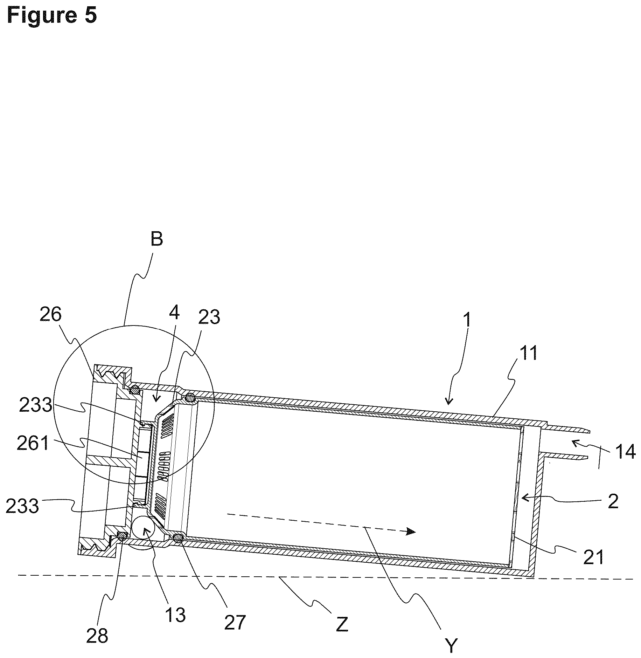

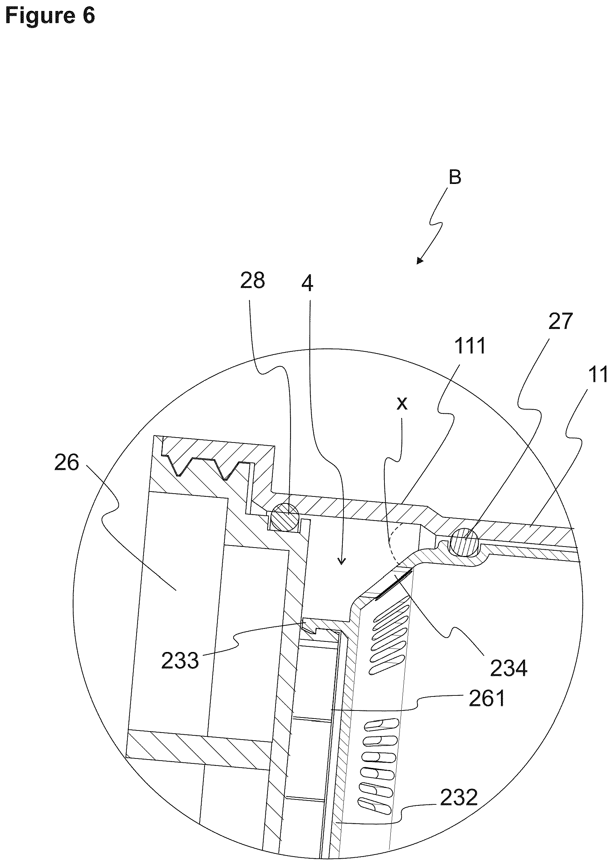

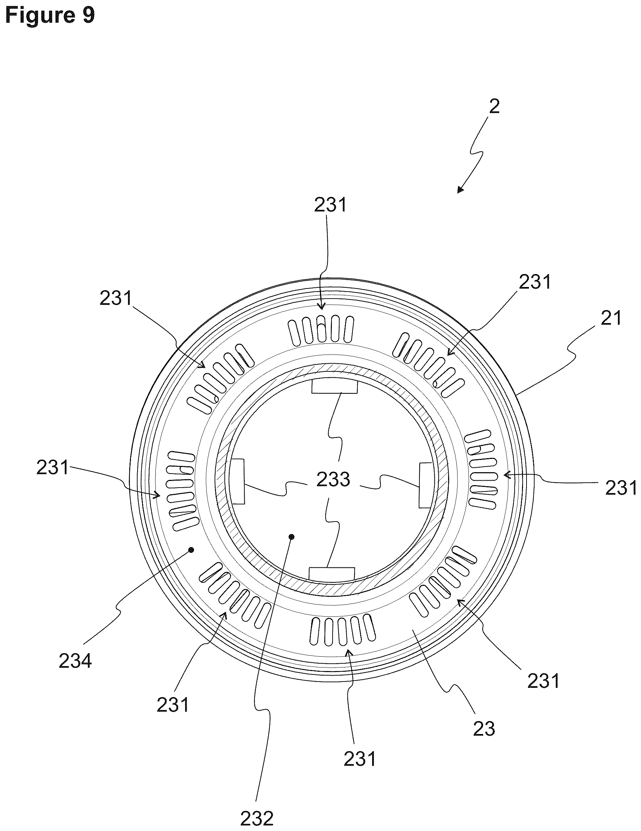

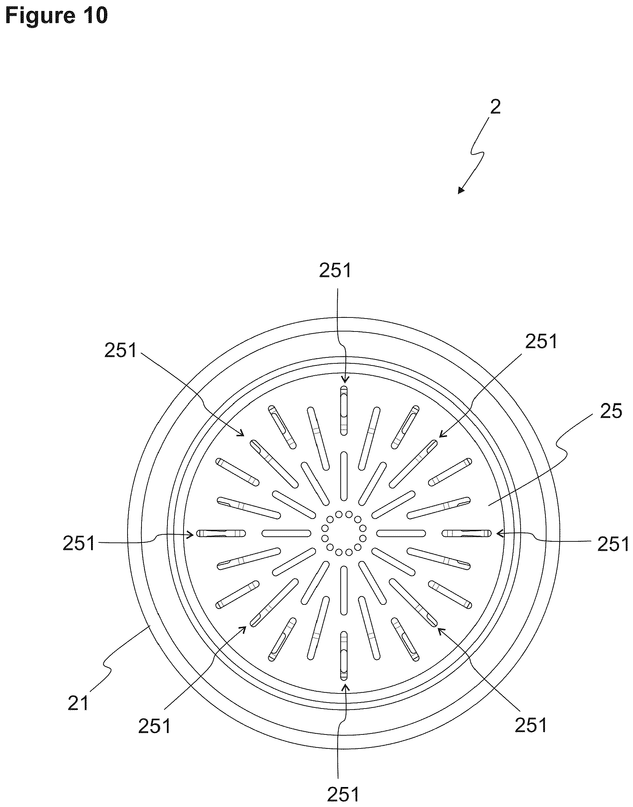

Accordingly, a water inlet plate (23) provided at a first end (22) of the filter body (21) comprises a lid contact surface (232) which is configured to ensure the said mounting, as in Figure 3, and a perforated surface (234) which is provided with water inlet openings (231) allowing the mains water to enter the filter body (21). As most clearly shown in Figures 7 and 9, the perforated surface (234) surrounds the lid contact surface (232) in a circular manner. According to this configuration, the perforated surface (234), when the resin filter (2) is in use in the water softening reservoir (1), is inclined so as to form an acute angle (X) with the reservoir body (11) as in Figure 6. Thus, when the sealing lid (26) is fixed onto the filter body (21) as in Figures 7 and 8, the perforated surface (234) remains exposed to allow water inlet. The sealing lid (26) is mounted onto the lid contact surface (232) by means of a plurality of claw structures (233) provided on the lid contact surface (232). The said claw structures (233) are configured to engage with a mounting protrusion (261) of the sealing lid (26) so as to fix the sealing lid (26) onto the filter body (21). At a second end (24) of the filter body (21), a water outlet plate (25) is provided. Thus, the mains water advancing along the filter body (21) as in Figure 5 becomes softened therein and exits the resin filter (2) through water outlet openings (251) provided on the water outlet plate (25). As shown in the configuration of Figure 10, the water outlet openings (251) are arranged on the water outlet plate (25) so as to provide a radial symmetry.

As can be understood from Figures 4 and 5, when the resin filter (2) is mounted in the water softening reservoir (1), the sealing lid (26) closes a reservoir opening (12) of the reservoir body (11) corresponding to the first end (22). Referring to the same figures, the filter body (21) is shaped and dimensioned to be inserted into the reservoir body (11) in a snap-fit manner. When the sealing lid (26) fully covers the reservoir opening (12), a first sealing member (27) provided on the filter body (21) so as to radially surround the first end (22) improves the sealing and snap-fit connection between the filter body (21) and the reservoir body (11). A second sealing member (28) provided on the sealing lid (26) and radially surrounding the sealing lid (26) is configured to prevent the leakage of the water to the outside of the reservoir body (11).

As seen in Figure 2, the water softening reservoir (1) is provided with a water inlet channel (13) for enabling the entry of the mains water into the reservoir body (11) and a water outlet channel (14) for permitting the exit thereof. When the resin filter (2) is mounted in the water softening reservoir (1), as referred to in Figures 3, 5, and 6, the mains water entering through the water inlet channel (13) first comes into contact with the perforated surface (234).

Referring to Figures 5 and 6, by means of the acute angle (X) formed between the perforated surface (234) and the reservoir body (11), a circular flow guiding volume (4) is created between the sealing lid (26), the perforated surface (234), and the reservoir body (11). After reaching this point, the mains water moves circularly along the flow guiding volume (4). When the mains water reaches the perforated surface (234) under pressure, the surface tension which occurs at this point delays the immediate passage of the mains water through the water inlet openings (231). Due to the boundary layer effect occurring here, when the mains water comes into contact with the perforated surface (234), the flow rate thereof decreases, which enables the water to be distributed homogeneously across the perforated surface (234). In addition, the circular form of the flow guiding volume (4) forces the mains water into a rotational motion, and when the boundary layer effect and the rotational motion occur simultaneously, a vortex effect is created in the flow guiding volume (4). This further supports the homogeneous distribution of the mains water across the perforated surface (234). As can be seen in Figure 3, the water inlet openings (231) on the perforated surface (234) form a radial symmetry. Thus, the mains water, which is already homogeneously distributed over the surface of the perforated surface (234), is enabled to pass through each water inlet opening (231) in equal amounts. As shown in Figures 4 and 6, the reservoir body (11) comprises an expansion region (111) in the portion corresponding to the flow guiding volume (4) This configuration increases the flow guiding volume (4) so as to support the distribution and laminar flow of the mains water across the perforated surface (234).

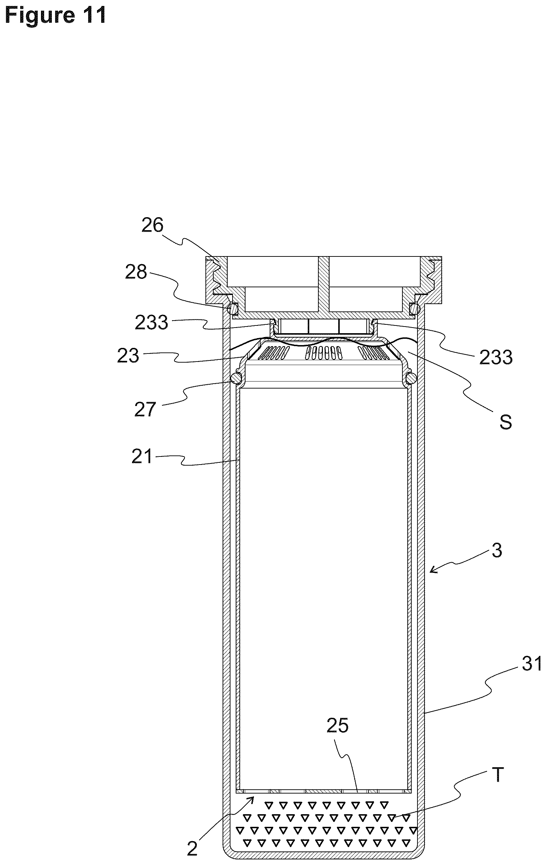

The regeneration casing (3) comprises a tubular casing body (31) which can be used independently of the appliance body (101). As can be understood from Figures 4 and 11, when the resin filter (2) is placed into the regeneration casing (3), the sealing lid (26) closes a casing opening (32) of the casing body (31) corresponding to the first end (22). Referring to the same figures, the filter body (21) is shaped and dimensioned to be inserted into the casing body (31) in a snap-fit manner. When the sealing lid (26) fully covers the reservoir opening (12), a first sealing member (27), this time, ensures the sealing and snap-fit connection between the filter body (21) and the casing body (31). While the resin filter (2) is in this position, the second sealing member (28) prevents the leakage of the brine (S) from the casing body (31) to the outside.

The present invention also discloses a household appliance (100) comprising a water softening reservoir (1) as in any one of the above embodiments. Accordingly, the household appliance (100) comprises the appliance body (101) which is configured to be positioned on an arrangement plane (Z) during use. As can be seen from Figures 1 and 5, the said water softening reservoir (1) is integrated into the appliance body (101) at an inclination with respect to the arrangement plane (Z). With reference to Figure 5, the said inclination is formed such that the flow direction (Y) of the mains water passing through the filter body (21) forms an angle of 5-30° with the arrangement plane (Z).

The household appliance (100) further comprises a mains water line (103) which is configured to deliver the mains water to the water inlet channel (13), and a washing water line (104) which is configured to transfer the water exiting the water outlet channel (14) to a washing chamber (102) provided in the appliance body (101). Referring to Figures 1 and 2, the mains water line (103) and the washing water line (104) may be hoses respectively associated with the water inlet channel (13) and the water outlet channel (14). As shown in Figure 1, the washing chamber (102) may be a drum wherein the laundry to be washed is placed. In an embodiment of the present invention, the household appliance (100) is a washing machine as shown in Figure 1. The washing machine comprises a sensor (105) which is adapted to measure the softening capacity of the ion exchange resin. Thus, the user is informed of the condition of the ion exchange resin and the need for regeneration.

Within the scope of a water softening and ion exchange resin regeneration method using the regeneration kit (10) of the present invention, the user first places the resin filter (2), which contains the ion exchange resin, into the water softening reservoir (1) on the appliance body (101). The user then uses the household appliance (100) in normal operation for a certain period of time. During this period, in each washing operation, the mains water is softened by being passed through the resin filter (2) before being delivered to the washing chamber (102). As a result of the softening cycles, the capacity of the ion exchange resin, which becomes enriched with calcium and magnesium ions, is detected as being exhausted by the sensor (105), and the user is notified of the condition. Thus, the user removes the resin filter (2) from the water softening reservoir (1) in order to regenerate the ion exchange resin. Moreover, the user prepares a brine solution (S), fills the same into the regeneration casing (3), and places the resin filter (2) therein to allow the ion exchange resin to be regenerated. The salt (T) concentration of the said brine solution (S) may range between 8-12% (weight/volume) based on the total volume of water. The said waiting period is at least 10 days. This period may be shortened by periodically agitating the regeneration casing (3). During the regeneration period, the user may either continue using the household appliance (100) by placing a second resin filter (2) into the water softening reservoir (1), or wait for the regeneration period to end in order to reuse the resin filter (2) in the regeneration casing (3).

## Claims

1. A regeneration kit (10) **comprising** a water softening reservoir (1) having a tubular reservoir body (11) which is arranged integrally with an appliance body (101) of a household appliance (100) and, during use, through which the mains water flows, a water inlet channel (13) which allows the entry of the mains water into the reservoir body (11), and a water outlet channel (14) which allows the exit of the mains water from the reservoir body (11), **characterized by**
- a resin filter (2) which is configured to be inserted into and removed from the water softening reservoir (1) and which has a tubular filter body (21) provided with an ion-exchange resin, a water inlet plate (23) arranged at a first end (22) of the filter body (21) and provided with water inlet openings (231) allowing the fluid to enter the filter body (21) during use in the water softening reservoir (1), and a water outlet plate (25) arranged at a second end (24) of the filter body (21) and provided with water outlet openings (251) allowing the fluid to exit the filter body (21) during use in the water softening reservoir (1); and
- a regeneration casing (3) having a casing body (31) which is configured to be filled with brine (S) in order to allow the resin filter (2) to be stored outside the appliance body (101) and to enable the regeneration of the ion-exchange resin independently of the appliance body (101).

2. A regeneration kit (10) as in Claim 1, **characterized by** the filter body (21), when in use in the water softening reservoir (1), which is configured to be retained in a snap fit manner in the reservoir body (11) and to enable the transfer of the mains water from the first end (22) to the second end (24) to be performed in a concentric manner with the reservoir body (11).

3. A regeneration kit (10) as in Claim 1 or 2, **characterized by** the resin filter (2) which is provided with a sealing lid (26) which, when the resin filter (2) is in use in the water softening reservoir (1), closes a reservoir opening (12) of the reservoir body (11) corresponding to the first end (22) of the filter body (21), and when the resin filter (2) is stored in the regeneration casing (3), closes a casing opening (32) of the casing body (31) corresponding to the first end (22) of the filter body (21).

4. A regeneration kit (10) as in Claim 3, **characterized by** the water inlet plate (23) which has a lid contact surface (232) which remains in contact with the sealing lid (26) while the sealing lid (26) is integrated with the filter body (21), and a perforated surface (234) which extends radially from the first end (22) of the filter body (21) toward the lid contact surface (232) and on which the water inlet openings (231) are provided.

5. A regeneration kit (10) as in Claim 4, **characterized by** the perforated surface (234) which is arranged such that the water inlet openings (231) form a radial symmetry.

6. A regeneration kit (10) as in Claim 5, **characterized by** the perforated surface (234), when the resin filter (2) is in use in the water softening reservoir (1), which is inclined so as to form an acute angle (X) with the reservoir body (11) and thereby create a flow guiding volume (4) which allows the rotational flow of the mains water entering through the water inlet channel (13) between the sealing lid (26) and the perforated surface (234)..

7. A regeneration kit (10) as in any one of Claims 4 to 6, **characterized by** a claw structure (233) which is provided on the lid contact surface (232), which is configured to engage with a mounting protrusion (261) of the sealing lid (26) so as to ensure that the sealing lid (26) remains fixed on the filter body (21).

8. A regeneration kit (10) as in any one of the above claims, **characterized by** the resin filter (2) having a first sealing member (27) which is arranged between the first end (22) and the water inlet plate (23) so as to surround the filter body (21).

9. A regeneration kit (10) as in any one of Claims 3 to 8, **characterized by** the resin filter (2) having a second sealing member (28) which is arranged so as to surround a radial thickness of the sealing lid (26), such that when the resin filter (2) is in use in the water softening reservoir (1), the second sealing member (28) remains between the sealing lid (26) and the reservoir body (11), and when the resin filter (2) is in the regeneration casing (3), the second sealing member (28) remains between the sealing lid (26) and the casing body (31).

10. A regeneration kit (10) as in any one of the above claims, **characterized by** the water outlet plate (25) which is arranged such that the water outlet openings (251) form a radial symmetry.

11. A household appliance (100) having an appliance body (101) wherein a water softening reservoir (1) provided in a regeneration kit (10) as in any one of the above claims is integrated.

12. A household appliance (100) as in Claim 11, **characterized by** the water softening reservoir (1) which is inclined such that the flow direction (Y) of the mains water passing through the filter body (21) forms an angle of 5-30° with the arrangement plane (Z) on which the appliance body (101) stands during use.

13. A household appliance (100) as in Claim 11 or 12, **characterized by** being a washing appliance comprising a mains water line (103) which is configured to deliver the mains water to the water inlet channel (13), and a washing water line (104) which is configured to transfer the water, softened by passing through the resin filter (2) and exiting the reservoir body (11) through the water outlet channel (14), to a washing chamber (102).

14. A household appliance (100) as in Claim 13, **characterized by** a sensor (105) which is adapted to measure the softening capacity of the ion exchange resin provided in the resin filter (2).

15. A water softening and ion exchange resin regeneration method using a regeneration kit (10) as in any one of Claims 1 to 10, comprising the following process steps:
i. Placing the resin filter (2) containing the ion exchange resin into the water softening reservoir (1) integrated into the appliance body (101),
ii. Softening the mains water by being passed through the water softening reservoir (1) and hence through the resin filter (2),
iii. Informing the user, after several washing cycles, that the softening capacity of the ion exchange resin has been exhausted,
iv. Preparing a brine solution and filling the same into the regeneration casing (3),
v. Removing the resin filter (2) from the water softening reservoir (1) and placing the same into the regeneration casing (3) filled with the brine (S),
vi. Regenerating the ion exchange resin in the resin filter (2) by leaving the resin filter (2) in the regeneration casing (3) for at least 10 days,
vii. Removing the resin filter (2) from the regeneration casing (3) after the regeneration process is completed, and
viii. Repeating the process starting from step (i).
